# EUROPÄISCHE PATENTSCHRIFT

(11) **EP 2 470 855 B1**
(45) Veröffentlichungstag und Bekanntmachung des Hinweises auf die Patenterteilung: **10.07.2013**
(21) Anmeldenummer: 10747565.9
(22) Anmeldetag: 24.08.2010
(51) Int. Cl.: F41J 5/02, G01V 8/10

(54) **VERFAHREN ZUR ELEKTRONISCHEN ERMITTLUNG DER SCHUSSLAGE BEI EINEM SCHIESSZIEL**
METHOD FOR ELECTRONICALLY DETERMINING THE SHOOTING POSITION ON A SHOOTING TARGET
PROCÉDÉ DE DÉTERMINATION ÉLECTRONIQUE DE LA POSITION DE TIR SUR UNE CIBLE

(30) Priorität: 25.08.2009 WO PCT/CH2009/000281
(43) Veröffentlichungstag der Anmeldung: 04.07.2012
(73) Patentinhaber: SIUS AG, 8307 Efiretikon (CH)
(72) Erfinder: WALTI-HERTER, Hansruedi, 8832 Wollerau (CH)
(74) Vertreter: Münch, Martin Walter
(86) Internationale Anmeldenummer: PCT/CH2010/000207
(87) Internationale Veröffentlichungsnummer: WO 2011/022853

(56) Entgegenhaltungen:
- CH-A5- 589 835
- CH-A5- 609 767
- US-A- 5 577 733

## Beschreibung

### TECHNISCHES GEBIET

Die vorliegende Erfindung betrifft ein Verfahren zur elektronischen Ermittlung der Schusslage bei einem Schiessziel, eine Anordnung zur elektronischen Ermittlung der Schusslage bei einem Schiessziel gemäss dem Verfahren sowie ein Schiessziel, insbesondere eine Schiessscheibe, mit der Anordnung zur Durchführung des Verfahrens gemäss den Oberbegriffen der unabhängigen Patentansprüche.

### STAND DER TECHNIK

Schiessziele mit elektronischer Schusslagenermittlung sind als "elektronische Schiessscheiben" sowohl für Trainingszwecke als auch bei Schiesswettbewerben weit verbreitet. Weltweiter Marktführer für solche Anlagen ist die Firma Sius AG, Effretikon, Schweiz, welche seit mehreren Jahrzehnten auf diesem Gebiet tätig ist.

Die heute bekannten Systeme können in akustische Systeme und optische bzw. photoelektrische Systeme unterteilt werden.

Bei den akustischen Systemen wird die vom Geschoss beim Durchtreten der die Zielfläche bildenden Körperlichkeit erzeugte Schallwelle mittels mehrerer akustischer Messaufnehmer gemessen und sodann aus den Laufzeitdifferenzen der von den Messaufnehmern gelieferten Messdaten die Schusslage ermittelt. Dabei sind die Messaufnehmer in einer akustisch abgeschirmten Kammer angeordnet, die an einer Seite von der die Zielfläche bildenden Körperlichkeit begrenzt wird. Derartige Schiessziele sind beispielsweise in CH 589 835 und CH 609 767 beschrieben.

Bei den optischen bzw. photoelektrischen Systemen durchfliegt das Geschoss einen optischen Vorhang, der aus einer Vielzahl sich in Schussrichtung gesehen kreuzender optischer Pfade gebildet wird, deren genaue Lage bekannt ist. Dabei unterbricht das Geschoss vorübergehend einige der optischen Pfade, was über photoelektrische Detektoren detektiert wird. Durch Auswertung der Signale der photoelektrischen Detektoren werden die beim Durchflug des Geschosses durch den optischen Vorhang vom Geschoss vorübergehend unterbrochenen optischen Pfade ermittelt und daraus die Schusslage bestimmt.

Die optischen Systeme weisen den Vorteil auf, dass für den Betrieb keinerlei Verschleissmaterial benötigt wird, wodurch zumindest im Trainingsbetrieb praktisch keine Materialkosten anfallen. Sie sind jedoch in der Anschaffung verhältnismässig teuer.

Die akustischen Systeme sind in der Anschaffung wesentlich günstiger als die optischen Systeme, benötigen jedoch in jedem Fall einen die Zielfläche bildenden Vorhang aus einem planen- oder plattenartigen Material, welcher beim Durchschiessen durchlöchert wird und erneuert werden muss, was mit entsprechenden laufenden Kosten verbunden ist.

### DARSTELLUNG DER ERFINDUNG

Es stellt sich daher die Aufgabe, ein Verfahren zur elektronischen Ermittlung der Schusslage bei einem Schiessziel, eine Anordnung zur elektronischen Ermittlung der Schusslage bei einem Schiessziel sowie ein Schiessziel mit elektronischer Schusslagenermittlung zur Verfügung zu stellen, welche die zuvor genannten Nachteile des Standes der Technik nicht aufweisen oder zumindest teilweise vermeiden.

Diese Aufgabe wird von dem Verfahren, der Anordnung und dem Schiessziel gemäss den unabhängigen Patentansprüchen gelöst.

Demgemäss betrifft ein erster Aspekt der Erfindung ein Verfahren zur elektronischen Ermittlung der Schusslage bei einem Schiessziel, wobei die Schusslage in einem ersten Einschussbereich des Schiesszieles ausschliesslich opto-elektronisch ermittelt wird und in einem zweiten Einschussbereich des Schiesszieles bevorzugterweise ausschliesslich akusto-elektronisch ermittelt wird.

Bevorzugterweise wird als erster Einschussbereich ein zentraler Einschussbereich des Schiessziels gewählt und als zweiter Einschussbereich ein den ersten Einschussbereich ganz oder teilweise umgebender Einschussbereich.

Durch dieses Verfahren wird es möglich, die Schusslage mit relativ kostengünstigen elektronischen Systemen und mit nur geringen laufenden Kosten für Verbrauchsmaterial zu ermitteln, indem lediglich in dem relativ kleinen zentralen Einschussbereich, welcher typischerweise eine hohe Einschusshäufigkeit aufweist und eine hohe Genauigkeit der Schusslagenermittlung erfordert, die Schusslage mit einem optischen Messsystem ermittelt wird, während die Schusslage in den diesen zentralen Bereich umgebenden relativ grossen Randbereichen mit einem kostengünstigen akustischen System ermittelt wird.

In einer bevorzugten Ausführungsform des Verfahrens wird die Schusslage in einem dritten Einschussbereich des Schiesszieles wahlweise opto-elektronisch oder akusto-elektronisch oder sowohl opto-elektronisch als auch akusto-elektronisch ermittelt. Dabei ist der dritte Einschussbereich bevorzugterweise zwischen dem ersten und dem zweiten Einschussbereich des Schiessziels gebildet, bevorzugterweise als Überlappungsbereich des ersten und des zweiten Einschussbereichs. Hierdurch ergibt sich der Vorteil, dass eine im Randbereich des zweiten Einschussbereichs möglicherweise unsichere akustische Schusslagenermittlung durch die optische Schusslagerermittlung ergänzt oder ersetzt werden kann.

Ein zweiter Aspekt der Erfindung betrifft eine Anordnung zur elektronischen Ermittlung der Schusslage bei einem Schiessziel mit dem Verfahren gemäss dem ersten Aspekt der Erfindung. Die Anordnung umfasst photoelektrische Lichtempfänger sowie Lichtquellen zum Aussenden von mit den Lichtempfängern detektierbarem Licht. Als Lichtempfänger kommen bevorzugterweise Photodioden oder Phototransistoren zum Einsatz, als Lichtquellen bevorzugterweise Leuchtdioden oder Laserdioden, wobei es bevorzugt ist, wenn diese im Infrarotbereich arbeiten, bevorzugterweise im Bereich einer Wellenlänge von 950 nm.

Dabei sind die Lichtempfänger und die Lichtquellen derartig relativ zueinander angeordnet, dass zwischen den Lichtempfängern und den Lichtquellen optische Pfade gebildet werden, über welche die Lichtempfänger Licht von einer der Lichtquellen empfangen können. Jeder Lichtempfänger verfügt also über einen Lichtpfad zu genau einer Lichtquelle der Anordnung.

Dabei bilden die optischen Pfade in bestimmungsgemässer Schussrichtung gesehen mindestens zwei, bevorzugterweise genau drei sich kreuzende Scharen aus optischen Pfaden, so dass sie im Bereich ihrer Kreuzung einen optischen Vorhang definieren, bei dessen Durchtreten ein Geschoss vorübergehend mindestens einen optischen Pfad von jeder der mindestens zwei sich kreuzenden Scharen von optischen Pfaden zumindest teilweise unterbricht. Entsprechend dürfen die Abstände zwischen den optischen Pfaden jeder Schar im Bereich des optischen Vorhangs nicht grösser als der Durchmesser des zu erfassenden Geschosses sein, bevorzugterweise nicht grösser als etwa zwei Drittel des Durchmessers des Geschosses. Dieser Durchmesser beträgt mindestens 3 mm, typischerweise zwischen 4 mm und 9 mm, so dass der Abstand zwischen den optischen Pfaden in dem für die Schusslagenermittlung genutzten Bereich des optischen Vorhangs 3 mm, bevorzugterweise 2 mm nicht überschreiten sollte. Die sich durchkreuzenden Scharen von optischen Pfaden können dabei in einer gemeinsamen Ebene verlaufen, so dass sich deren optische Pfade treffen, oder auch in Schussrichtung gesehen mit einem geringen Abstand hintereinander angeordnet sein, so dass sich die optischen Pfade nicht treffen.

Weiter umfasst die Anordnung mehrere akustische Messaufnehmer, jeweils zum Erfassen einer Schallwelle, welche von einem Geschoss beim Durchschiessen einer bei bestimmungsgemässer Verwendung der Anordnung mit einem geringen Abstand parallel zu dem optischen Vorhang verlaufenden und eine Zielfläche bereitstellenden planen- oder plattenartigen Körperlichkeit erzeugt wird. Die akustischen Messaufnehmer sind mit einem Abstand zueinander angeordnet, so dass sich bei unterschiedlichen Durchschusspositionen durch die planen- oder plattenartigen Körperlichkeit unterschiedliche Laufzeiten der Schallwelle zu den einzelnen Messaufnehmern ergeben. Unter einem geringen Abstand wird hier ein Abstand von maximal einigen Zentimetern verstanden.

Zudem umfasst die Anordnung elektronische Auswertemittel, mit welchen die Durchtrittsposition eines Geschosses durch den optischen Vorhang aus den beim Durchtritt des Geschosses durch den optischen Vorhang von den photoelektrischen Lichtempfängern gelieferten Signalen ermittelt werden kann. Auch sind die Auswertemittel in der Lage, die Durchtrittsposition eines Geschosses durch eine bei bestimmungsgemässer Verwendung der Anordnung mit einem geringen Abstand parallel zu dem optischen Vorhang verlaufende und die Zielfläche bereitstellende planen- oder plattenartige Körperlichkeit aus den Laufzeitdifferenzen der von den akustischen Messaufnehmern erfassten Schallwelle, die vom Geschoss beim Durchschiessen der planen- oder plattenartigen Körperlichkeit erzeugt wird, zu ermitteln. Dabei ist es bevorzugt, wenn die Auswertemittel zudem Mittel zum Anzeigen der jeweils ermittelten Durchtrittsposition, z.B. einen Monitor, umfassen.

Die Lichtquellen und Lichtempfänger sowie die akustischen Messaufnehmer sind derartig angeordnet und die elektronischen Auswertemittel derartig ausgebildet, dass in bestimmungsgemässer Schussrichtung gesehen eine Kreisfläche maximalen Durchmessers, welche innerhalb des optischen Vorhangs beschreibbar ist, also innerhalb des Bereichs, in welchem die Durchtrittsposition eines Geschosses durch den optischen Vorhang aus den von den photoelektrischen Lichtempfängern gelieferten Signalen ermittelbar ist, teilweise oder vollständig von dem Bereich umgeben ist bzw. teilweise oder vollständig innerhalb des Bereiches liegt, innerhalb welchem die Durchtrittsposition eines Geschosses durch eine bei bestimmungsgemässer Verwendung der Anordnung mit einem geringen Abstand parallel zu dem optischen Vorhang verlaufende planen- oder plattenartige Körperlichkeit aus den Laufzeitdifferenzen der von den akustischen Messaufnehmern erfassten Schallwelle ermittelbar ist.

Bevorzugterweise ist die Anordnung derartig ausgebildet, dass die innerhalb des optischen Vorhangs beschreibbare Kreisfläche maximalen Durchmessers im Durchmesser höchstens halb so gross ist wie eine Kreisfläche maximalen Durchmessers mit gleichem Kreiszentrum, welche in dem Bereich beschreibbar ist, in welchem die Durchtrittsposition eines Geschosses durch eine bei bestimmungsgemässer Verwendung der Anordnung mit einem geringen Abstand parallel zu dem optischen Vorhang verlaufende planen- oder plattenartige Körperlichkeit aus den Laufzeitdifferenzen der von den akustischen Messaufnehmern (11) erfassten Schallwelle ermittelbar ist.

Durch die Erfindung wird es möglich, Schiessziele mit elektronischer Schusslagenermittlung zur Verfügung zu stellen, bei denen die Schusslage lediglich in dem relativ kleinen zentralen Bereich, welcher typischerweise eine hohe Einschusshäufigkeit aufweist und eine hohe Genauigkeit der Schusslagenermittlung erfordert, durch ein optisches Messsystem ermittelt wird, während die Schusslage in den diesen zentralen Bereich umgebenden relativ grossen Randbereichen mit einem kostengünstigen akustischen System ermittelt wird. Auf diese Weise können sowohl die Investitionskosten für das Schiessziel als auch die laufenden Kosten für Verbrauchsmaterial sehr niedrig gehalten werden.

Mit Vorteil sind die akustischen Messaufnehmer in einer Ebene parallel zum optischen Vorhang angeordnet, wobei der Abstand dieser Ebene zum optischen Vorhang bevorzugterweise weniger als 20 mm beträgt. Hierdurch ergibt sich eine besonders kompakte erfindungsgemässe Anordnung.

In einer weiteren bevorzugten Ausführungsform der Anordnung umfasst diese eine Vielzahl einzelner photoelektrischer Lichtempfänger. Dabei sind die Lichtempfänger und die Lichtquellen derartig relativ zueinander angeordnet, dass zwischen jedem einzelnen Lichtempfänger und einer der Lichtquellen ein optischer Pfad gebildet wird, über welchen der Lichtempfänger Licht von der Lichtquelle empfangen kann. Auf diese Weise lässt sich die Anzahl und die räumliche Anordnung der Lichtempfänger individuell an die jeweiligen Erfordernisse anpassen.

Bevorzugterweise ist jeder der sich kreuzenden Scharen von optischen Pfaden einer Lichtquelle zugeordnet, mittels welcher durch Aussendung eines zusammenhängenden Lichtkörpers, insbesondere durch Aussendung eines zusammenhängenden Lichtvorhangs, wie z.B. eines Lichtbandes oder eines Lichtfächers, sämtliche der optischen Pfade der jeweiligen Schar mit Licht beaufschlagbar sind. Es werden also nicht für jeden Lichtempfänger einzelne Lichtstrahlen erzeugt, sondern für sämtliche Lichtempfänger einer Schar ein einziger zusammenhängender Lichtstrahl, bevorzugterweise mit einer Form, die im Wesentlichen einer Mantelfläche um die optischen Pfade dieser Schar entspricht.

Dabei ist es weiter bevorzugt, dass die Anordnung derartig ausgebildet, dass die optischen Pfade der sich kreuzenden Scharen je Schar ausgehend von der dieser Schar zugeordneten Lichtquelle divergierend zu den Lichtempfängern verlaufen. Hierdurch ergibt sich eine hohe Energiedichte im Bereich der lichtaktiven Flächen der Lichtquellen, wodurch im Betrieb eine Erwärmung dieser Flächen resultiert, welche einer Taubildung auf diesen Flächen und damit einer unkontrollierten Streuung des von der jeweiligen Lichtquelle ausgesandten Lichts entgegenwirkt.

In noch einer weiteren bevorzugten Ausführungsform der Anordnung verlaufen sämtliche optischen Pfade des zur Schusslagenermittlung verwendeten optischen Vorhangs in einer Ebene oder zu einer mittig zwischen den optischen Pfaden gebildeten Ebene mit einem Abstand von höchstens +/- 3 mm. Der Gesamte von den optischen Pfaden gebildete optische Vorhang weist also in Schussrichtung gesehen eine Dicke von höchstens 6 mm auf. Hierdurch lässt sich ein Parallaxefehler beim schrägen Einschiessen in den optischen Vorhang vermeiden oder zumindest auf ein Minimum reduzieren.

In noch einer weiteren bevorzugten Ausführung der Anordnung weisen sämtliche der optischen Pfade des optischen Vorhangs die gleiche Länge auf. Hierdurch ergeben sich im Betrieb bei allen Lichtempfängern im Wesentlichen vergleichbare Betriebsbedingungen.

In noch einer weiteren bevorzugten Ausführungsform der Anordnung wird zumindest ein Teil der optischen Pfade des optischen Vorhangs umgelenkt, bevorzugterweise über Spiegelflächen oder Prismen. Hierdurch wird eine Aufspreizung der Scharen von optischen Pfaden ausserhalb des Bereiches, in welchem diese den optischen Vorhang bilden, möglich, wodurch es wiederum möglich wird, die optischen Pfade im Bereich des optischen Vorhangs mit einem deutlich kleineren Abstand zueinander anzuordnen als es bei nicht-umgelenkten optischen Pfaden möglich ist, bei denen der Mindestabstand der optischen Pfade durch die Abmessungen der Lichtempfänger vorgegeben wird. Dies wiederum ermöglicht eine feinere Auflösung und damit eine genauere Bestimmung der Schusslage.

In noch einer weiteren bevorzugten Ausführungsform der Anordnung weisen die optischen Pfade jeder der sich kreuzenden Scharen jeweils im mittleren Bereich der jeweiligen Schar einen geringeren Abstand zueinander und/oder eine geringere Divergenz auf als in den Randbereichen der Schar. Hierdurch wird im Zentrum des optischen Vorhangs, welches bei bestimmungsgemässer Verwendung der Anordnung in Schussrichtung gesehen mit dem Zentrum der Zielfläche eines mit der Anordnung versehenen Schiesszieles zusammenfällt, eine feinere Auflösung und damit eine genauere Bestimmung der Schusslage ermöglicht als in den Randbereichen.

In noch einer weiteren bevorzugten Ausführungsform der Anordnung sind die den Lichtpfaden der sich kreuzenden Scharen zugeordneten Lichtempfänger je Schar derartig angeordnet, dass ihre photoelektrisch sensiblen Flächen in einer oder mehreren Reihen nebeneinander angeordnet sind. Hierdurch lassen sich auf einfache Weise bestimmte vorteilhafte Konfigurationen bilden.

Dabei ist es bei Ausführungsformen, bei denen die optischen Pfade der sich kreuzenden Scharen jeweils im mittleren Bereich einen geringeren Abstand zueinander und/oder eine geringere Divergenz aufweisen als in den Randbereichen, bevorzugt, dass dies dadurch erreicht wird, dass die photoelektrisch sensiblen Flächen jeweils im mittleren Bereich der jeweiligen Schar in einer grösseren Anzahl Reihen nebeneinander und versetzt zueinander angeordnet sind als in den Randbereichen der Schar. Hierdurch lässt sich durch einfache Massnahmen eine feinere Auflösung und damit eine genauere Bestimmung der Schusslage im Zentrum des optischen Vorhangs als in dessen Randbereichen erzielen.

Auch ist es bei Ausführungsformen der erfindungsgemässen Anordnung, bei denen die photoelektrisch sensiblen Flächen in einer oder mehreren Reihen nebeneinander angeordnet sind, bevorzugt, dass die nebeneinander angeordneten photoelektrisch sensiblen Flächen der einer Schar von optischen Pfaden zugeordneten Lichtempfänger mit einem optischen Diffusor und/oder einer Linsenanordnung versehen sind, zum optischen Verkleinern oder Aufheben der zwischen den einzelnen photoelektrisch sensiblen Flächen vorhandenen (nicht photoelektrisch sensiblen) Lücken durch Lichtstreuung.

In noch einer weiteren bevorzugten Ausführungsform umfasst die Anordnung des Weiteren eine Lüfteranordnung zur Beaufschlagung der photoelektrisch sensiblen Flächen der Lichtempfänger und/oder der lichtaktiven Flächen der Lichtquellen mit einem Luftstrom zur Verhinderung einer Ablagerung von Verschmutzungen wie z.B. Staub oder Papierschnipseln.

In noch einer weiteren bevorzugten Ausführungsform ist die Anordnung bzw. sind deren Lichtempfänger und die elektronischen Auswertemittel derartig ausgebildet, dass für die Ermittlung der Durchtrittsposition eines Geschosses durch den optischen Vorhang je Lichtempfänger eine Vielzahl verschiedener Helligkeitswerte unterschieden werden kann. Hierdurch wird es möglich, die Auflösung deutlich zu erhöhen, da auch verschiedene Grade von Teilabdeckungen der einzelnen optischen Pfade, welche aus unterschiedlichen Durchtrittspositionen des durch den optischen Vorhang hindurch tretenden Geschosses bezüglich des jeweiligen optischen Pfades resultieren, erfasst und ausgewertet werden können.

Dabei ist es weiter bevorzugt, dass die elektronische Auswertemittel derartig ausgebildet sind, dass im Betrieb eine fortlaufende Selbsteichung der Anordnung bezüglich der je Lichtempfänger auftretenden maximalen und minimalen Helligkeitswerte aufgrund der von den Lichtempfängern gelieferten Signale und der ermittelten Durchtrittspositionen möglich ist. Hierzu können beispielsweise die von den Lichtempfängern vor einem Durchschuss des optischen Vorhangs gelieferten Signale jeweils als maximale Helligkeitswerte für den jeweiligen Lichtempfänger erfasst werden und ein von einem Lichtempfänger, dessen Lichtpfad bei einem Durchschuss aufgrund der ermittelten Schusslage als vollständig abgedeckt erkannt worden ist, beim Durchschuss geliefertes Signal als minimaler Helligkeitswert für diesen Lichtempfänger erfasst werden, und anschliessend der hierdurch begrenzte Signalbereich des Lichtempfängers in eine bestimmte Anzahl von verschiedenen Teilabdeckungen des Lichtpfades zugeordneten Signalen eingeteilt werden. Hierdurch kann eine Typenstreuung und Drift der Lichtempfänger eliminiert werden und die Langzeitgenauigkeit deutlich erhöht werden.

In noch einer weiteren bevorzugten Ausführungsform der Anordnung sind die elektronischen Auswertemittel zudem derartig ausgebildet, dass eine Eichung der Anordnung mittels Anfahren definierter Durchtrittspositionen im optischen Vorhang mit einer Geschossattrappe bzw. mit einem einen Schusskanal repräsentierenden undurchsichtigen Körper möglich ist. Hierdurch lässt sich die Genauigkeit der Anordnung steigern und ebenfalls eine Typenstreuung der Lichtempfänger eliminieren.

In noch einer weiteren bevorzugten Ausführungsform ist die Anordnung derartig ausgebildet, dass die Signale der Lichtempfänger pro Sekunde mindestens 100000 mal ausgewertet werden können, bevorzugterweise mindestens 200000 mal. Hierdurch wird es möglich, auch kurze Geschosse von z.B. 4 mm Länge beim Durchflug durch den optischen Vorhang vielfach zu erfassen und dadurch deren Geschwindigkeit, Form und/oder Dicke mit hoher Präzision zu bestimmen. Auch wird es durch die Vielfachmessung möglich, etwaige Störsignale durch vergleich mit anderen, korrekten Signalen zu eliminieren.

Entsprechend ist es bevorzugt, dass die Auswertemittel der Anordnung derartig ausgebildet sind, dass sie eine Bestimmung der zuvor genannten Grössen und/oder eine Eliminierung von Störsignalen ermöglichen.

Ein dritter Aspekt der Erfindung betrifft ein Schiessziel, bevorzugterweise eine Schiessscheibe, zur Durchführung des Verfahrens gemäss dem ersten Aspekt der Erfindung, mit einer Anordnung gemäss dem zweiten Aspekt der Erfindung sowie mit einer in geringem Abstand, d.h. mit einem Abstand von höchstens einigen Zentimetern, parallel zum optischen Vorhang der Anordnung verlaufenden planen- oder plattenartigen Körperlichkeit, bevorzugterweise aus Gummituch, Kunststofffolie wie z.B. PVC-Folie, Papier oder Karton, welche eine im Wesentlichen ebene Fläche zum Beschiessen mit Geschossen bildet.

Mit anderen Worten betrifft also der dritte Aspekt der Erfindung ein Schiessziel mit elektronischer Schusslagenermittlung, bei welchem die Schusslage in einem ersten Einschussbereich des Schiesszieles ausschliesslich opto-elektronisch ermittelt wird und in einem zweiten Einschussbereich, welcher den ersten Einschussbereich bevorzugterweise ganz oder teilweise umgibt, ausschliesslich akusto-elektronisch ermittelt wird.

Hierdurch kann ein Schiessziel mit elektronischer Schusslagenermittlung zur Verfügung gestellt werden, bei welchem lediglich in dem relativ kleinen zentralen Bereich, welcher typischerweise eine hohe Einschusshäufigkeit aufweist und eine hohe Genauigkeit der Schusslagenermittlung erfordert, die Schusslage durch ein optisches Messsystem ermittelt wird, während die Schusslage in den diesen zentralen Bereich umgebenden relativ grossen Randbereichen mit einem kostengünstigen akustischen System ermittelt wird. Auf diese Weise können sowohl die Investitionskosten für das Schiessziel als auch die laufenden Kosten für Verbrauchsmaterial sehr niedrig gehalten werden.

Hierzu ist es bevorzugt, dass die planen- oder plattenartige Körperlichkeit in einem zentralen Bereich eine mit Vorteil kreisrunde Zielöffnung aufweist, welche ein Geschoss in bestimmungsgemässer Schussrichtung durchfliegen kann, ohne die planen- oder plattenartigen Körperlichkeit zu durchschiessen, und dass das Schiessziel derartig ausgebildet ist, dass die Durchtrittsposition eines diese Zielöffnung an beliebiger Stelle in bestimmungsgemässer Schussrichtung durchfliegenden Geschosses aus den beim Durchtritt des Geschosses durch den optischen Vorhang von den photoelektrischen Lichtempfängern gelieferten Signalen ermittelt werden kann und die Durchtrittsposition eines die planen- oder plattenartige Körperlichkeit in einem die Zielöffnung umgebenden Flächenbereich in bestimmungsgemässer Schussrichtung durchschiessenden Geschosses aus den Laufzeitdifferenzen der von den akustischen Messaufnehmern erfassten Schallwelle, die vom Geschoss beim Durchschiessen der planen- oder plattenartigen Körperlichkeit erzeugt wird, ermittelt werden kann.

Dabei ist es von Vorteil, dass das Schiessziel derartig ausgebildet ist, dass in bestimmungsgemässer Schussrichtung gesehen eine innerhalb des optischen Vorhangs beschreibbare Kreisfläche maximalen Durchmessers, also innerhalb des Bereichs, in welchem die Durchtrittsposition eines Geschosses aus den beim Durchtritt des Geschosses von den photoelektrischen Lichtempfängern gelieferten Signalen ermittelbar ist, deckungsgleich mit der Zielöffnung ist oder geringfügig über die Begrenzungen der Zielöffnung hinausgeht. Hierdurch kann das Schiessziel besonders kostengünstig gestaltet werden, da die optische Schusslagenermittlung nur für der zentralen Bereich dimensioniert werden muss und gegenüber rein optischen Messsystemen einen entsprechend geringeren Umfang aufweist. Im letztgenannten Fall, dass die innerhalb des optischen Vorhangs beschreibbare Kreisfläche maximalen Durchmessers in bestimmungsgemässer Schussrichtung gesehen geringfügig über die Begrenzungen der Zielöffnung hinausgeht, ergibt sich der Vorteil, dass eine im Randbereich der Zielöffnung möglicherweise unsichere akustische Schusslagenermittlung durch die optische Schusslagerermittlung ergänzt oder ersetzt werden kann.

In einer weiteren bevorzugten Ausführungsform des Schiessziels sind die akustischen Messaufnehmer in bestimmungsgemässer Schussrichtung gesehen hinter der planen- oder plattenartigen Körperlichkeit angeordnet, weil sie hierdurch die beim Durchschiessen der planen- oder plattenartigen Körperlichkeit erzeugte Schallwelle besonders gut erfassen können.

Der optische Vorhang ist bevorzugterweise in bestimmungsgemässer Schussrichtung gesehen vor oder nach der planen- oder plattenartigen Körperlichkeit angeordnet.

In noch einer weiteren bevorzugten Ausführungsform des Schiesszieles ist die erfindungsgemässe Anordnung zur photoelektrischen Ermittlung der Schusslage derartig angeordnet, dass die optischen Pfade des optischen Vorhangs bei bestimmungsgemäss ausgerichtetem Schiessziel diagonal vor, hinter und/oder in der Zielebene verlaufen, wobei die Lichtempfänger oberhalb der Lichtquellen angeordnet sind. Hierdurch wird eine Verschmutzung der Lichtempfänger durch Ablagerung von Staub und von Papierschnitzeln von einer etwaigen als Zielfläche dienende Papierzielscheibe verhindert. Durch den diagonalen Verlauf der optischen Pfade können zudem die lichtaktiven Flächen der Lichtquellen schräg ausgebildet werden, so dass eine Ablagerung von Staub und von Papierschnipseln auf diesen Flächen zumindest erschwert wird.

### KURZE BESCHREIBUNG DER ZEICHNUNGEN

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine stark schematisierte Draufsicht auf ein erfindungsgemässes Schiessziel;
die Figuren 2a bis 2c stark schematisierte Vertikalschnitte durch das Schiessziel aus Fig. 1 in verschiedenen Situationen; und
Fig. 3 eine erfindungsgemässe Anordnung zur elektronischen Ermittlung der Schusslage bei einem Schiessziel.

### WEGE ZUR AUSFÜHRUNG DER ERFINDUNG

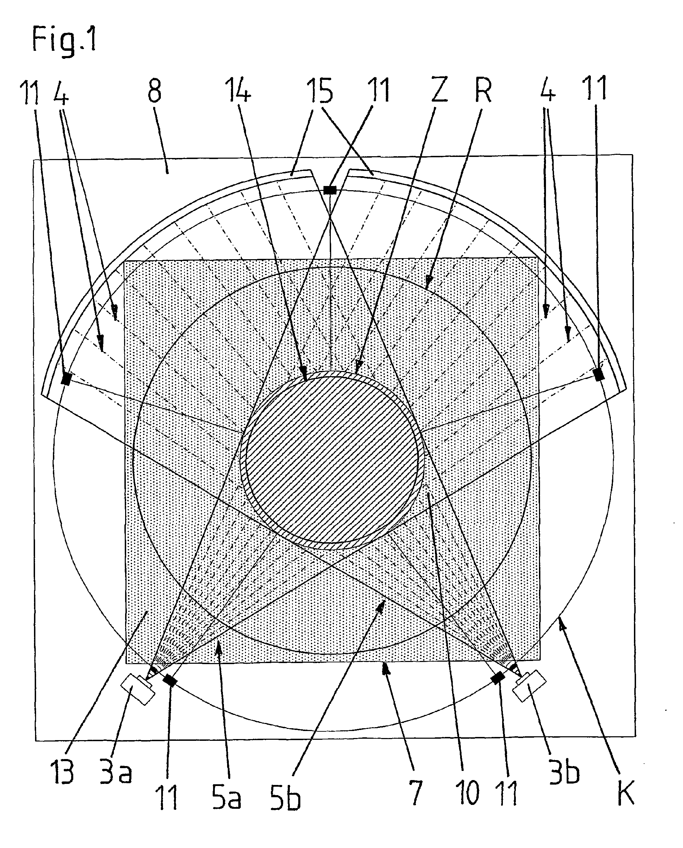

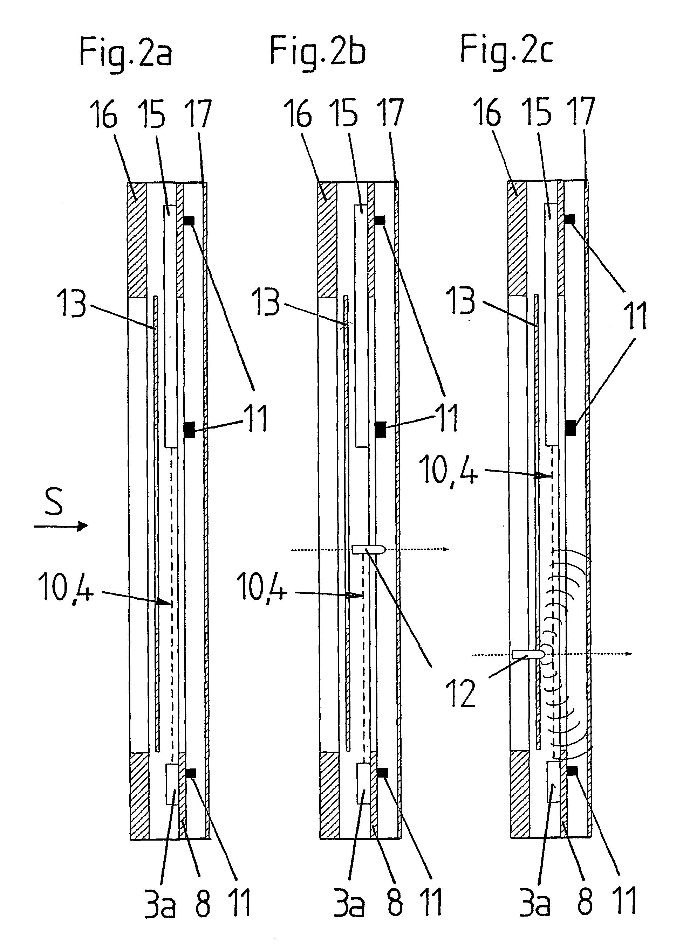

Das Grundkonzept der Erfindung ergibt sich aus den Figuren 1 und 2a bis 2b, welche stark schematisiert eine Draufsicht auf ein erfindungsgemässes Schiessziel (Fig. 1) sowie Vertikalschnitte durch das Schiessziel in verschiedenen Situationen zeigen(Fig. 2a bis 2c).

Wie aus einer Zusammenschau dieser Figuren zu erkennen ist, umfasst das Schiessziel eine Platine 8 mit einem zentralen Ausschnitt 7, welche auf ihrer in bestimmungsgemässer Einschussrichtung S gesehenen Vorderseite Reihen 15 aus einer Vielzahl einzelner photoelektrischer Lichtempfänger und Lichtquellen 3a, 3b zum Aussenden von mit den Lichtempfängern detektierbarem Licht trägt. Dabei sind die Reihen 15 aus Lichtempfängern und die Lichtquellen 3a, 3b derartig relativ zueinander angeordnet, dass zwischen jedem der Lichtempfänger der Reihen 15 und einer der Lichtquellen 3a, 3b ein optischer Pfad 4 (durch gestrichelte Linien angedeutet) gebildet wird, über welchen der jeweilige Lichtempfänger Licht von einer der Lichtquellen 3a, 3b empfangen kann.

Diese optischen Pfade 4 bilden in bestimmungsgemässer Schussrichtung S gesehen zwei sich kreuzende Scharen 5a, 5b aus optischen Pfaden 4 identischer Länge und definieren dadurch einen optischen Vorhang 10, bei dessen Durchtreten ein Geschoss 12 vorübergehend mindestens einen optischen Pfad 4 von jeder der sich kreuzenden Scharen 5a, 5b zumindest teilweise unterbricht.

Wie weiter zu erkennen ist, ist jeder Schar 5a, 5b von optischen Pfaden 4 genau eine Lichtquelle 3a, 3b zugeordnet, mittels welcher durch Aussendung eines zusammenhängenden Lichtvorhangs sämtliche der optischen Pfade 4 dieser Schar 5a, 5b mit Licht beaufschlagt werden. Dabei verlaufen die optischen Pfade 4 jeder Schar 5a, 5b ausgehend von der der jeweiligen Schar 5a, 5b zugeordneten Lichtquelle 3a, 3b divergierend. Sämtliche der optischen Pfade 4 verlaufen zudem in einer gemeinsamen Ebene.

Weiter weist die Platine 8 auf ihrer in bestimmungsgemässer Einschussrichtung S gesehenen Rückseite fünf akustische Messaufnehmer 11 auf, welche auf einer Kreisbahn K gleichmässig am Umfang des zentralen Ausschnitts 7 verteilt angeordnet sind.

Wie insbesondere aus den Figuren 2a bis 2c zu erkennen ist, ist in bestimmungsgemässer Einschussrichtung S gesehenen vor dem zentralen Ausschnitt 7 der Platine 8 eine planen- oder plattenartige Körperlichkeit 13, im vorliegenden Fall eine Zielscheibe 13 aus Karton, angeordnet, welche in ihrem Zentrum eine kreisrunde Zielöffnung 14 aufweist, die von einem Geschoss 12 in bestimmungsgemässer Schussrichtung S durchflogen werden kann, ohne die Zielscheibe 13 infolge Durchschiessens zu beschädigen. Dabei ist die Zielöffnung 14 derartig ausgerichtet, dass sie in bestimmungsgemässer Schussrichtung S gesehen konzentrisch innerhalb einer Kreisfläche Z maximalen Durchmessers liegt, welche innerhalb des optischen Vorhangs 10 beschreibbar ist.

Angeordnet in bestimmungsgemässer Einschussrichtung S gesehenen vor der Platine 8 und der Zielscheibe 13 ist ein Schutzrahmen 16 (in Fig. 1 nicht gezeigt), welcher die Platine 8 vor Beschuss schützt, den zentralen Ausschnitt 7 der Platine 8 jedoch frei lässt.

Angeordnet in bestimmungsgemässer Einschussrichtung S gesehenen hinter der Platine 8 ist eine Rückwand 17 aus Karton, welche zusammen mit der Platine 8 eine akustische Kammer bildet, innerhalb welcher die akustischen Messaufnehmer 11 angeordnet sind.

Durchfliegt nun ein Geschoss 12 die zentrale Zielöffnung 14 der Zielscheibe 13, wie dies in Fig. 2b dargestellt ist, so unterbricht es vorübergehend mindestens einen optischen Pfad 4 von jeder der sich kreuzenden Scharen 5a, 5b des optischen Vorhangs 10 zumindest teilweise. In diesem Fall wird die Durchtrittsposition durch die Zielscheibe 13 mit Hilfe einer ebenfalls auf der Platine 8 angeordneten elektronischen Schaltung (nicht gezeigt) aus den beim Durchtritt durch den optischen Vorhang 10 von den photoelektrischen Lichtempfängern gelieferten Signalen ermittelt.

Durchschiesst das Geschoss 12 hingegen die Zielscheibe 13 in einem die zentrale Öffnung 14 umgebenden Bereich, wie dies in Fig. 2c dargestellt ist, so erzeugt es beim Durchtritt durch die Zielscheibe 13 eine Schallwelle, welche von den akustischen Messaufnehmern 11 erfasst wird. In diesem Fall wird die Durchtrittsposition durch die Zielscheibe 13 ebenfalls mit der auf der Platine 8 angeordneten elektronischen Schaltung ermittelt, in diesem Fall aber aus den Laufzeitdifferenzen der von den akustischen Messaufnehmern 11 erfassten Schallwelle.

Durchschiesst das Geschoss 12 die Zielscheibe 13 im Randbereich der zentralen Öffnung 14 innerhalb des Bereichs der Kreisfläche Z maximalen Durchmessers, welche innerhalb des optischen Vorhangs 10 beschreibbar ist, so wird die Durchtrittsposition ebenfalls aus den beim Durchtritt durch den optischen Vorhang 10 von den photoelektrischen Lichtempfängern gelieferten Signalen ermittelt, da die akustische Messung in diesem Bereich unsicher ist.

Wie aus Fig. 1 ersichtlich wird, ist die innerhalb des optischen Vorhangs 10 beschreibbare Kreisfläche Z maximalen Durchmessers im vorliegenden Fall im Durchmesser knapp halb so gross wie der Durchmesser einer in dem Bereich beschreibbare Kreisfläche R maximalen Durchmessers mit gleichem Kreiszentrum, in welchem die Durchtrittsposition des Geschosses durch die Zielscheibe aus den Laufzeitdifferenzen der von den akustischen Messaufnehmern erfassten Schallwelle ermittelt wird, wodurch sich der Vorteil ergibt, dass das optische Messsystem verhältnismässig günstig sein kann.

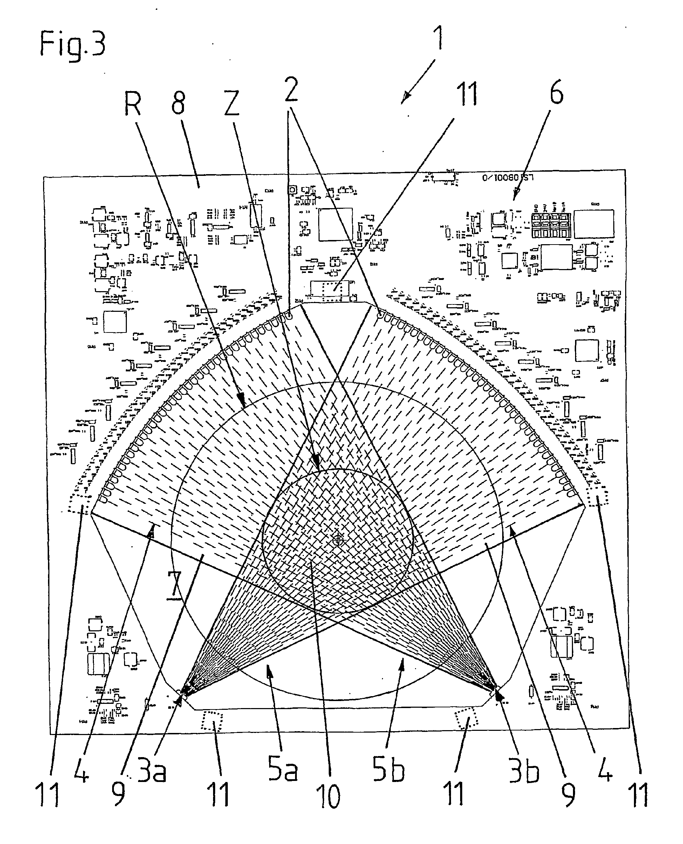

Fig. 3 zeigt eine konkrete Ausgestaltung einer erfindungsgemässen Anordnung 1 zur elektronischen Ermittlung der Schusslage bei einem Schiessziel in Form einer Platine 8 mit darauf angeordneten Leiterbahnen und elektronischen Komponenten in einer Draufsicht. Diese Anrdnung kann verwendet werden zur Bildung des erfindungseässen Schiessziels gemäss den Figuren 1 und 2a bis 2c.

Die Platine 8 weist einen zentralen Ausschnitt 7 auf, welcher beim bestimmungsgemässen Betrieb der Anordnung 1 von den Geschossen, deren Schusslage zu ermitteln ist, durchflogen wird und in dessen Zentrum im Betrieb der anspruchsgemässe optische Vorhang 10 gebildet wird. Hierzu sind am oberen Rand des Ausschnittes 7 rechts und links jeweils 36 Stück infrarotlicht-sensible Phototransistoren 2 (anspruchsgemässe Lichtempfänger) mit ihren photoelektrisch sensiblen Flächen in einer Reihe nebeneinander angeordnet und diesen gegenüberliegend je Reihe eine Infrarotleuchtdiode 3a, 3b mit einer Strichlinse (anspruchsgemässe Lichtquellen), mit welcher die jeweilige Reihe von Phototransistoren 2 mit einem zusammenhängenden fächerförmigen Lichtvorhang 9 vollständig beleuchtet werden kann. Auf diese Weise wird zwischen jedem der Phototransistoren 2 und der jeweils seiner Reihe zugeordneten Leuchtdiode 3a, 3b ein optischer Pfad 4 (siehe gestrichelte Linien) gebildet.

Dabei bilden die optischen Pfade 4 zwei sich kreuzende Scharen 5a, 5b von divergierenden optischen Pfaden 4, in deren Kreuzungsbereich 10 (anspruchsgemässer optischer Vorhang) ein durch den Ausschnitt 7 fliegendes Geschoss mit einem Durchmesser von 3 mm vorübergehend mindestens einen optischen Pfad 4 von jeder der beiden Scharen 5a, 5b optischer Pfade 4 unterbricht.

Da die Phototransistoren 2 und die Leuchtdioden 3a, 3b alle auf der Platine 8 befestigt sind, verlaufen sämtliche optischen Pfade 4 in einer Ebene, welche im Wesentlichen mit der Platinenebene zusammenfällt, die senkrecht zur bestimmungsgemässen Durchflugrichtung des zu erfassenden Geschosses durch den optischen Vorhang verläuft. Da die Reihen von nebeneinander angeordneten Phototransistoren 2 jeweils identische Kreisringabschnitte bilden, in deren Krümmungszentren jeweils die lichtaktive Fläche der zugeordneten Leuchtdiode 3a, 3b angeordnet ist, weisen sämtliche optischen Pfade 4 eine identische Länge auf.

Auf der Rückseite der Platine 8 sind zudem fünf identische Ultraschallsensoren 11 (anspruchsgemässe akustische Messaufnehmer) mit einem Abstand zueinander angeordnet, zum Erfassen einer Schallwelle, welche von einem Geschoss beim Durchschiessen einer bei bestimmungsgemässer Verwendung der Anordnung mit einem geringen Abstand parallel zu den sich kreuzenden Scharen 5a, 5b von optischen Pfaden 4 verlaufenden Zielscheibe (anspruchsgemässe planen- oder plattenartigen Körperlichkeit), z.B. aus Karton oder Papier, erzeugt wird. Dadurch, dass die akustischen Messaufnehmer 11 auf der Platine 8 angeordnet sind, sind ihre akustisch aktiven Flächen in einer Ebene parallel zu den zwei sich kreuzenden Scharen 5a, 5b von optischen Pfaden 4 angeordnet, welche Ebene im vorliegenden Fall einen Abstand von ca. 10 mm zu den optischen Pfaden 4 aufweist.

Auch sind auf der Platine 8 verschiedene weitere elektronische Bauteile und Leiterbahnen angeordnet, welche zusammen eine elektronische Auswerteeinheit 6 (anspruchsgemässe elektronische Auswertemittel) bilden, mit welcher die Durchtrittsposition eines Geschosses durch den Kreuzungsbereich 10 der zwei sich kreuzende Scharen 5a, 5b von divergierenden optischen Pfaden 4 (optischer Vorhang), dessen Durchtrittsgeschwindigkeit sowie dessen Form bzw. Kaliber aus den beim Durchtritt des Geschosses von den Phototransistoren 2 gelieferten Signalen ermittelt und auf einem Monitor (nicht gezeigt) angezeigt werden kann. Weiter ist die elektronische Auswerteeinheit 6 in der Lage, die Durchtrittsposition eines Geschosses durch eine bei bestimmungsgemässer Verwendung der Anordnung mit einem geringen Abstand parallel zu den sich kreuzenden Scharen 5a, 5b von optischen Pfaden 4 verlaufenden Zielscheibe (anspruchsgemässe planen- oder plattenartigen Körperlichkeit) aus den Laufzeitdifferenzen der von den akustischen Messaufnehmern 11 erfassten Schallwelle, die vom Geschoss beim Durchschiessen der Zielscheibe erzeugt wird, zu ermitteln.

Dabei ist die Anordnung derartig ausgebildet, dass in bestimmungsgemässer Schussrichtung gesehen eine Kreisfläche Z maximalen Durchmessers, welche innerhalb des Kreuzungsbereichs 10 der zwei sich kreuzende Scharen 5a, 5b von divergierenden optischen Pfaden 4 (optischer Vorhang 10) beschreibbar ist, vollständig von einem Bereich umgeben ist, in welchem die Durchtrittsposition eines Geschosses durch eine bei bestimmungsgemässer Verwendung der Anordnung mit einem geringen Abstand parallel zu den sich kreuzenden Scharen 5a, 5b von optischen Pfaden 4 verlaufenden Zielscheibe (anspruchsgemässe planen- oder plattenartigen Körperlichkeit) aus den Laufzeitdifferenzen der von den akustischen Messaufnehmern 11 erfassten Schallwelle ermittelbar ist.

Wie zu erkennen ist, ist im vorliegenden Fall die innerhalb des Kreuzungsbereichs 10 der zwei sich kreuzenden Scharen 5a, 5b von divergierenden optischen Pfaden 4 (optischer Vorhang 10) beschreibbare Kreisfläche Z maximalen Durchmessers im Durchmesser weniger als halb so gross ist wie eine in demjenigen Bereich beschreibbare Kreisfläche R maximalen Durchmessers mit gleichem Kreiszentrum, in welchem die Durchtrittsposition eines Geschosses durch eine bei bestimmungsgemässer Verwendung der Anordnung mit einem geringen Abstand parallel zu den sich kreuzenden Scharen 5a, 5b von optischen Pfaden 4 verlaufenden Ziel (anspruchsgemässe planen- oder plattenartigen Körperlichkeit) aus den Laufzeitdifferenzen der von den akustischen Messaufnehmern 11 erfassten Schallwelle ermittelbar ist.

Zudem ist die Auswerteeinheit 6 derartig ausgebildet, dass eine Eichung der Anordnung 1 mittels Anfahren definierter Durchtrittspositionen im Kreuzungsbereichs 10 der zwei sich kreuzende Scharen 5a, 5b von divergierenden optischen Pfaden 4 (optischer Vorhang 10) mit einer Geschossattrappe oder mit einem einen Schusskanal repräsentierenden undurchsichtigen Körper möglich ist, sowie im Betrieb eine fortlaufende Selbsteichung bezüglich der je Phototransistor 2 auftretenden maximalen und minimalen Helligkeitswerte aufgrund der von den Phototransistoren 2 gelieferten Signale und der ermittelten Durchtrittspositionen der Geschosse.

Die gesamte Anordnung ist tauchlackiert und daher wetterfest und wird bei bestimmungsgemässer Verwendung in der gezeigten Orientierung eingesetzt, d.h. mit den Leuchtdioden 3a, 3b unten und den Phototransistoren 2 oben.

## Patentansprüche

1. Verfahren zur elektronischen Ermittlung der Schusslage bei einem Schiessziel, wobei die Schusslage in einem ersten, insbesondere zentralen Einschussbereich des Schiesszieles ausschliesslich opto-elektronisch ermittelt wird und in einem zweiten, insbesondere den ersten Einschussbereich ganz oder teilweise umgebenden Einschussbereich des Schiesszieles insbesondere ausschliesslich akusto-elektronisch ermittelt wird.

2. Verfahren nach Anspruch 1, wobei die Schusslage in einem dritten Einschussbereich des Schiesszieles, welcher insbesondere als Überlappungsbereich des ersten und des zweiten Einschussbereichs des Schiesszieles ausgebildet ist, wahlweise opto-elektronisch oder akusto-elektronisch oder sowohl opto-elektronisch als auch akusto-elektronisch ermittelt wird.

3. Anordnung (1) zur elektronischen Ermittlung der Schusslage bei einem Schiessziel gemäss dem Verfahren nach einem der vorangehenden Ansprüche, umfassend
a) photoelektrische Lichtempfänger (2) sowie Lichtquellen (3a, 3b) zum Aussenden von mit den Lichtempfängern (2) detektierbarem Licht,
wobei die Lichtempfänger (2) und die Lichtquellen (3a, 3b) derartig relativ zueinander angeordnet sind, dass zwischen den Lichtempfängern (2) und den Lichtquellen (3a, 3b) optische Pfade (4) gebildet werden, über welche die Lichtempfänger (2) Licht von den Lichtquellen (3a, 3b) empfangen können, und
wobei die optischen Pfade (4) in bestimmungsgemässer Schussrichtung (S) gesehen mindestens zwei, insbesondere genau drei sich kreuzende Scharen (5a, 5b) aus optischen Pfaden (4) bilden und dadurch einen optischen Vorhang (10) definieren, bei dessen Durchtreten ein Geschoss (12) vorübergehend mindestens einen optischen Pfad (4) von jeder der sich kreuzenden Scharen (5a, 5b) zumindest teilweise unterbricht,
b) mehrere akustische Messaufnehmer (11), welche mit einem Abstand voneinander angeordnet sind, zum Erfassen einer Schallwelle, welche von einem Geschoss (12) beim Durchschiessen einer bei bestimmungsgemässer Verwendung der Anordnung mit einem geringen Abstand parallel zu dem optischen Vorhang (10) verlaufenden planen- oder plattenartigen Körperlichkeit (13) erzeugt wird, und
c) elektronische Auswertemittel (6), welche derartig ausgebildet sind, dass mit ihnen die Durchtrittsposition eines Geschosses (12) durch den optischen Vorhang (10) aus den beim Durchtritt des Geschosses (12) durch den optischen Vorhang (10) von den photoelektrischen Lichtempfängern (2) gelieferten Signalen und die Durchtrittsposition eines Geschosses (12) durch eine bei bestimmungsgemässer Verwendung der Anordnung mit einem geringen Abstand parallel zu dem optischen Vorhang (10) verlaufende planen- oder plattenartigen Körperlichkeit (13) aus den Laufzeitdifferenzen der von den akustischen Messaufnehmern (11) erfassten Schallwelle, die vom Geschoss (12) beim Durchschiessen der planen- oder plattenartigen Körperlichkeit (13) erzeugt wird, ermittelt werden kann,
wobei die Anordnung derartig ausgebildet ist, dass in bestimmungsgemässer Schussrichtung (S) gesehen eine Kreisfläche (Z) maximalen Durchmessers, welche innerhalb des optischen Vorhangs (10) beschreibbar ist, teilweise oder vollständig von einem Bereich umgeben ist, in welchem die Durchtrittsposition eines Geschosses durch eine bei bestimmungsgemässer Verwendung der Anordnung mit einem geringen Abstand parallel zu dem optischen Vorhang (10) verlaufende planen- oder plattenartige Körperlichkeit (13) aus den Laufzeitdifferenzen der von den akustischen Messaufnehmern (11) erfassten Schallwelle ermittelbar ist.

4. Anordnung nach Anspruch 3, wobei die Anordnung derartig ausgebildet ist, dass die innerhalb des optischen Vorhangs (10) beschreibbare Kreisfläche (Z) maximalen Durchmessers einen Durchmesser von höchstens zwei Dritteln, insbesondere höchstens der Hälfte des Durchmessers einer in dem Bereich beschreibbare Kreisfläche (R) maximalen Durchmessers mit gleichem Kreiszentrum, in welchem die Durchtrittsposition eines Geschosses (12) durch eine bei bestimmungsgemässer Verwendung der Anordnung mit einem geringen Abstand parallel zu dem optischen Vorhang (10) verlaufende planen- oder plattenartige Körperlichkeit (13) aus den Laufzeitdifferenzen der von den akustischen Messaufnehmern (11) erfassten Schallwelle ermittelbar ist, aufweist.

5. Anordnung nach einem der Ansprüche 3 bis 4, wobei die akustischen Messaufnehmer (11) in einer Ebene parallel zum optischen Vorhang (10) angeordnet sind, und insbesondere, dass diese Ebene mit einem Abstand kleiner als 20 mm zum optischen Vorhang (10) verläuft.

6. Anordnung nach einem der Ansprüche 3 bis 5, wobei eine Vielzahl einzelner photoelektrischer Lichtempfänger (2) vorhanden ist und wobei die Lichtempfänger (2) und die Lichtquellen (3a, 3b) derartig relativ zueinander angeordnet sind, dass zwischen jedem der Lichtempfänger (2) und einer der Lichtquellen (3a, 3b) ein optischer Pfad (4) gebildet ist, über welchen der Lichtempfänger (2) Licht von der Lichtquelle (3a, 3b) empfangen kann.

7. Anordnung nach einem der Ansprüche 3 bis 6, wobei jeder Schar (5a, 5b) von optischen Pfaden (4) eine Lichtquelle (3a, 3b) zugeordnet ist, mittels welcher durch Aussendung eines zusammenhängenden Lichtkörpers (9), insbesondere durch Aussendung eines zusammenhängenden Lichtvorhangs (9), sämtliche der optischen Pfade (4) dieser Schar mit Licht beaufschlagbar sind.

8. Anordnung nach Anspruch 7, wobei die optischen Pfade (4) jeder der mindestens zwei sich kreuzenden Scharen (5a, 5b) ausgehend von der der jeweiligen Schar zugeordneten Lichtquelle (3a, 3b) divergierend verlaufen.

9. Anordnung nach einem der Ansprüche 3 bis 8, wobei sämtliche der optischen Pfade (4) in einer Ebene verlaufen oder zu einer mittig zwischen den optischen Pfaden (4) gebildeten Ebene höchstens einen Abstand von +/- 3 mm aufweisen.

10. Anordnung nach einem der Ansprüche 3 bis 9, wobei sämtliche der optischen Pfade (4) die gleiche Länge aufweisen.

11. Anordnung nach einem der Ansprüche 3 bis 10, wobei zumindest ein Teil der optischen Pfade umgelenkt ist, insbesondere über Spiegelflächen oder Prismen.

12. Anordnung nach einem der Ansprüche 3 bis 11, wobei die optischen Pfade jeder der mindestens zwei sich kreuzenden Scharen jeweils im mittleren Bereich der jeweiligen Schar einen geringeren Abstand zueinander und/oder eine geringere Divergenz aufweisen als in den Randbereichen der Schar.

13. Anordnung nach einem der Ansprüche 3 bis 12, wobei die den optischen Pfaden (4) der mindestens zwei sich kreuzenden Scharen (5a, 5b) zugeordneten Lichtempfänger (2) je Schar derartig angeordnet sind, dass ihre photoelektrisch sensiblen Flächen in einer oder mehreren Reihen nebeneinander angeordnet sind.

14. Anordnung nach Anspruch 12 und nach Anspruch 13, wobei die photoelektrisch sensiblen Flächen jeweils im mittleren Bereich der jeweiligen Schar in einer grösseren Anzahl Reihen nebeneinander angeordnet sind als in den Randbereichen der Schar.

15. Anordnung nach einem der Ansprüche 13 bis 14, wobei die nebeneinander angeordneten photoelektrisch sensiblen Flächen der einer Schar von optischen Pfaden zugeordneten Lichtempfänger mit einem optischen Diffusor und/oder einer Linsenanordnung versehen sind, zum optischen Verkleinern oder Aufheben der zwischen den einzelnen photoelektrisch sensiblen Flächen vorhandenen Lücken.

16. Anordnung nach einem der Ansprüche 3 bis 15, des Weiteren umfassend eine Lüfteranordnung zur Beaufschlagung der photoelektrisch sensiblen Flächen der Lichtempfänger (2) und/oder der lichtaktiven Flächen der Lichtquellen (3a, 3b) mit einem Luftstrom zwecks Verhinerung der Ablagerung von Verschmutzungen.

17. Anordnung nach einem der Ansprüche 3 bis 16, wobei die Lichtempfänger (2) und die elektronischen Auswertemittel (6) derartig ausgebildet sind, dass für die Ermittlung der Durchtrittsposition eines Gechosses (12) durch den optischen Vorhang (10) je Lichtempfänger (2) eine Vielzahl verschiedener Helligkeitswerte unterschieden werden kann.

18. Anordnung nach Anspruch 17, wobei die elektronischen Auswertemittel (6) derartig ausgebildet sind, dass im Betrieb eine fortlaufende Selbsteichung der Anordnung (1) bezüglich der je,Lichtempfänger (2) auftretenden maximalen und minimalen Helligkeitswerte aufgrund der von den Lichtempfängern gelieferten Signale und der ermittelten Durchtrittspositionen der Geschosse (12) möglich ist.

19. Anordnung nach einem der Ansprüche 3 bis 18, wobei die elektronischen Auswertemittel (6) derartig ausgebildet sind, dass eine Eichung der Anordnung (1) mittels Anfahren definierter Durchtrittspositionen im optischen Vorhang (10) mit einer Geschossattrappe bzw. mit einem einen Schusskanal repräsentierenden undurchsichtigen Körper möglich ist.

20. Anordnung nach einem der Ansprüche 3 bis 19, wobei die Anordnung (1) derartig ausgebildet ist, dass die Signale der Lichtempfänger (2) pro Sekunde mindestens 100000 mal erfasst werden können, bevorzugterweise mindestens 200000 mal.

21. Anordnung nach Anspruch 20, wobei die Auswertemittel (6) derartig ausgebildet sind, dass mit ihnen durch Auswertung der von den photoelektrischen Lichtempfängern (2) beim Durchflug des Geschosses (12) durch den optischen Vorhang (10) gelieferten Signale die Geschwindigkeit, die Form und/oder die Dicke des Geschosses (12) bestimmbar ist.

22. Schiessziel, insbesondere Schiessscheibe, umfassend eine Anordnung (1) nach einem der Ansprüche 3 bis 21 und eine mit geringem Abstand parallel zum optischen Vorhang (10) verlaufende planen- oder plattenartigen Körperlichkeit (13), insbesondere aus Gummituch, Kunststofffolie, Papier oder Karton, welche eine im Wesentlichen ebene Fläche zum Beschiessen mit Geschossen (12) bildet.

23. Schiessziel nach Anspruch 22, wobei die planen- oder plattenartige Körperlichkeit (13) in einem zentralen Bereich eine insbesondere kreisrunde Zielöffnung (14) aufweist, welche ein Geschoss (12) in bestimmungsgemässer Schussrichtung (S) durchfliegen kann, ohne die planen- oder plattenartigen Körperlichkeit (13) zu durchschiessen, und wobei das Schiessziel derartig ausgebildet ist, dass die Durchtrittsposition eines diese Zielöffnung (14) an beliebiger Stelle in bestimmungsgemässer Schussrichtung (S) durchfliegenden Geschosses (12) aus den beim Durchtritt des Geschosses (12) durch den optischen Vorhang (10) von den photoelektrischen Lichtempfängern (2) gelieferten Signalen ermittelt werden kann.

24. Schiessziel nach Anspruch 23, wobei das Schiessziel derartig ausgebildet ist, dass die Durchtrittsposition eines die planen- oder plattenartige Körperlichkeit (13) in einem die Zielöffnung (14) umgebenden Zielflächenbereich in bestimmungsgemässer Schussrichtung durchschiessenden Geschosses (12) aus den Laufzeitdifferenzen der von den akustischen Messaufnehmern (11) erfassten Schallwelle, die vom Geschoss (12) beim Durchschiessen der planen- oder plattenartigen Körperlichkeit (13) erzeugt wird, ermittelt werden kann.

25. Schiessziel nach einem der Ansprüche 23 bis 24, wobei das Schiessziel derartig ausgebildet ist, dass in bestimmungsgemässer Schussrichtung (S) gesehen eine innerhalb des Bereichs, in welchem die Durchtrittsposition eines Geschosses (12) durch den optischen Vorhang (10) aus den beim Durchtritt des Geschosses (12) durch den optischen Vorhang (10) von den photoelektrischen Lichtempfängern (2) gelieferten Signalen ermittelbar ist, beschreibbare Kreisfläche (Z) maximalen Durchmessers im Wesentlichen deckungsgleich mit der Zielöffnung (14) ist oder geringfügig über die Begrenzungen der Zielöffnung (14) hinausgeht.

26. Schiessziel nach einem der Ansprüche 22 bis 25, wobei die akustischen Messaufnehmer (11) in bestimmungsgemässer Schussrichtung (S) gesehen hinter der planen- oder plattenartigen Körperlichkeit (13) angeordnet sind und wobei der optische Vorhang (10) in bestimmungsgemässer Schussrichtung (S) gesehen vor oder nach der planen- oder plattenartigen Körperlichkeit (13) angeordnet ist.

27. Schiessziel nach einem der Ansprüche 22 bis 26, wobei die optischen Pfade (4) des optischen Vorhangs (10) bei bestimmungsgemäss ausgerichtetem Schiessziel diagonal vor, hinter und/oder in der Zielebene verlaufen und die Lichtempfänger (2) oberhalb der Lichtquellen (3a, 3b) angeordnet sind.

## Claims

1. Method for electronically determining the shooting position on a shooting target, wherein the shooting position is determined exclusively in an opto-electronic manner in a first, particularly central impact area of the shooting target and is determined in particular exclusively in an acousto-electronic manner in a second impact area of the shooting target, which in particular is surrounding the first impact area partially or entirely.

2. Method according to claim 1, wherein the shooting position in a third impact area of the shooting target, which in particular is formed as overlapping area of the first and the second impact areas of the shooting target, is determined optionally in an opto-electronic or acousto-electronic manner or in an opto-electronic and acousto-electronic manner.

3. Arrangement (1) for electronically determining the shooting position on a shooting target by means of the method according to one of the preceding claims, comprising
a) photo-electric light receivers (2) as well as light sources (3a, 3b) for transmitting light which can be detected by the light receivers (2),
wherein the light receivers (2) and the light sources (3a, 3b) are arranged relatively to each other in such a way that optical paths (4) are formed between the light receivers (2) and the light sources (3a, 3b), via which the light receivers (2) can receive light from the light sources (3a, 3b), and
wherein the optical paths (4), seen in the intended shooting direction (S), form at least two, in particular exactly three inter-crossing groups (5a, 5b) of optical paths (4) and thereby define an optical screen (10), such that a projectile (12) temporarily interrupts at least partially at least one optical path (4) of each of the inter-crossing groups (5a, 5b) when it passes through it,
b) multiple acoustic transducers (11) arranged at a distance from each other for detecting an acoustic wave which is generated by a projectile (12) when shooting through a canvas-like or plate-like object (13) running in the intended use of the arrangement with a small distance parallel to the optical screen (10), and
c) electronic evaluation means (6) formed in such a way that by them the pass-through position of a projectile (12) through the optical screen (10) can be determined from the signals provided by the photo-electric light receivers (2) when the projectile (12) passes through the optical screen (10) and the pass-through position of a projectile (12) through a canvas-like or plate-like object (13) running in the intended use of the arrangement with a small distance parallel to the optical screen (10) can be determined on the basis of delay times of the acoustic wave detected by the acoustic transducers (11), which is generated when the projectile passes through the canvas-like or plate-like object (13),
wherein the arrangement is formed in such a way that, seen in the intended shooting direction (S), a circular area of maximum diameter (Z), which can be defined within the optical screen (10), is surrounded partially or entirely by an area in which the pass-through position of a projectile through a canvas-like or plate-like object (13) running in the intended use of the arrangement with a small distance parallel to the optical screen (10) can be determined on the basis of the delay times of the acoustic wave detected by the acoustic transducers (11).

4. Arrangement according to claim 3, wherein the arrangement is formed in such a way that the circular area (Z) of maximum diameter, which can be defined within the optical screen (10), has a diameter of at most two thirds, particularly at most the half of the diameter of a circular area (R) of maximum diameter with the same circle center, which can be defined in the area in which the pass-through position of a projectile (12) through a canvas-like or plate-like object (13) running in the intended use of the arrangement with a small distance parallel to the optical screen (10), can be determined on the basis of the delay times of the acoustic wave detected by the acoustic transducers (11).

5. Arrangement according to one of the claims 3 to 4, wherein the acoustic transducers (11) are arranged in a plane which is parallel to the optical screen (10), and particularly that this plane is located at a distance smaller than 20 mm to the optical screen (10).

6. Arrangement according to one of the claims 3 to 5, wherein a plurality of individual photo-electric light receivers (2) is present and wherein the light receivers (2) and the light sources (3a, 3b) are arranged with respect to each other in such a way that an optical path (4) is formed between each light receiver (2) and one of the light sources (3a, 3b), via which the light receiver (2) can receive light from the light source (3a, 3b).

7. Arrangement according to one of the claims 3 to 6, wherein a light source (3a, 3b) is attributed to each one of the groups (5a, 5b) of optical paths (4), by means of which all of the optical paths (4) of the group can be provided with light by emitting a continuous light body (9), particularly by emitting a continuous light screen (9).

8. Arrangement according to claim 7, wherein the optical paths (4) of each of the at least two inter-crossing groups (5a, 5b) run in a diverging way starting from the light source (3a, 3b) attributed to this group.

9. Arrangement according to one of the claims 3 to 8, wherein all optical paths (4) run in a plane or have a distance of at most +/- 3 mm with respect to a plane formed in the middle between the optical paths (4).

10. Arrangement according to one of the claims 3 to 9, wherein all optical paths (4) have the same length.

11. Arrangement according to one of the claims 3 to 10, wherein at least a part of the optical paths is deflected, in particular via mirror surfaces or prisms.

12. Arrangement according to one of the claims 3 to 11, wherein the optical paths of each of the at least two inter-crossing groups have each a smaller mutual distance and/or a smaller divergence in the middle area of the respective group than in the edge areas of the group.

13. Arrangement according to one of the claims 3 to 12, wherein the light receivers (2) attributed to the light paths (4) of the at least two inter-crossing groups (5a, 5b) are arranged per group in such a way that their photo-electric-sensitive surfaces are arranged side by side in one or more rows.

14. Arrangement according to claim 12 and claim 13, wherein the photo-electric-sensitive surfaces are each arranged side by side in the middle area of the respective group in a higher number of rows than in the edge areas of the group.

15. Arrangement according to one of the claims 13 to 14, wherein the photo-electric-sensitive surfaces arranged side by side of the light receivers attributed to one group of optical paths are provided with an optical diffuser and/or a lens arrangement, for optically decreasing or cancelling out the gaps which are present between the individual photo-electric-sensitive surfaces.

16. Arrangement according to one of the claims 3 to 15, further comprising a fan arrangement for acting upon the photo-electric sensitive surfaces of the light receivers (2) and/or the light-active surfaces of the light sources (3a, 3b) with an air stream for avoiding an accumulation of dirt.

17. Arrangement according to one of the claims 3 to 16, wherein the light receivers (2) and the electronic evaluation means (6) are formed in such a way that a plurality of different brightness values can be distinguished for each light receiver (2) in order to determine the pass-through position of a projectile (12) through the optical screen (2).

18. Arrangement according to claim 17, wherein the electronic evaluation means (6) are formed in such a way that in operation a continuous self-calibration of the arrangement (1) with respect to the maximum and minimum brightness values occurring for each light receiver (2) is possible based on the signals delivered by the light receivers and the determined pass-through positions of the projectiles (12).

19. Arrangement according to one of the claims 3 to 18, wherein the electronic evaluation means (6) are formed in such a way that a calibration of the arrangement (1) is possible by approaching defined pass-through positions in the optical screen (10) with a projectile dummy or with an opaque body representing a shooting path respectively.

20. Arrangement according to one of the claims 3 to 19, wherein the arrangement (1) is formed in such a way that the signals of the light receivers (2) can be evaluated at least 100000 times per second, preferably at least 200000 times.

21. Arrangement according to claim 20, wherein the evaluation means (6) are formed in such a way that it is possible to determine the speed, the shape and/or the thickness of the projectile (12) with them by evaluating the signals delivered by the photo-electric light receivers (2) during the passage of the projectile (12) through the optical screen (10).

22. Shooting target, particularly shooting disc, comprising an arrangement (1) according to one of the claims 3 to 21 and a canvas-like or plate-like object (13) running at a small distance parallel to the optical screen (10), particularly made of a rubber tissue, plastic foil, paper or carton, which forms a substantially plane surface for shooting at with projectiles (12).

23. Shooting target according to claim 22, wherein the canvas-like or plate-like object (13) has a particularly round target opening (14) in a central area, which can be passed through by a projectile (12) in the intended shooting direction (S) without penetrating the canvas-like or plate-like object (13), and wherein the shooting target is formed in such a way that the pass-through position of a projectile (12) flying through this target opening (14) in the intended shooting direction (S) at an arbitrary position can be determined based on the signals delivered by the photo-electric light receivers (2) when the projectile (12) passes through the optical screen (10).

24. Shooting target according to claim 23, wherein the shooting target is formed in such a way that the pass-through position of a projectile (12) penetrating the canvas-like or plate-like object (13) in the intended shooting direction in a target surface area surrounding the target opening (14) can be determined from the delay times of the acoustic wave detected by the acoustic transducers (11), which is generated by the projectile (12) when it shoots through the canvas-like or plate-like object (13).

25. Shooting target according to one of the claims 23 to 24, wherein the shooting target is formed in such a way that, seen in the intended shooting direction (S), a circular area (Z) of maximum diameter, which can be defined within the area inside which the pass-through position of a projectile (12) through the optical screen (10) can be determined by the signals provided by the photo-electric light receivers (2), is substantially congruent to the target opening (14) or extends to a minimum extent beyond the limits of the target opening (14).

26. Shooting target according to one of the claims 22 to 25, wherein the acoustic transducers (11), seen in the intended shooting direction (S), are arranged behind the canvas-like or plate-like object (13), and wherein the optical screen (10), seen in the intended shooting direction (S), is arranged in front of or behind the canvas-like or plate-like object (13).

27. Shooting target according to one of the claims 22 to 26, wherein, when the shooting target is oriented as intended, the optical paths (4) of the optical screen (10) run diagonally in front of, behind and/or in the target plane and the light detectors (2) are arranged above the light sources (3a, 3b).

## Revendications

1. Procédé de détermination électronique de l'impact sur une cible de tir, dans lequel on détermine l'impact dans une première zone, notamment centrale, d'impact de la cible de tir exclusivement de manière optoélectronique et dans une deuxième zone d'impact, entourant notamment en tout ou partie la première zone d'impact, de la cible de tir, notamment exclusivement de manière acoustoélectronique.

2. Procédé suivant la revendication 1,
dans lequel on détermine l'impact dans une troisième zone d'impact de la cible de tir, qui est constituée, notamment sous la forme d'une zone à cheval de la première et de la deuxième zones d'impact de la cible de tir, au choix de manière optoélectronique ou de manière acoustoélectronique ou à la fois de manière optoélectronique et de manière acoustoélectronique.

3. Dispositif (1) de détermination électronique de l'impact sur une cible de tir suivant le procédé suivant l'une des revendications précédentes comprenant
a) des récepteurs (2) de lumière photoélectriques, ainsi que des sources (3a,3b) lumineuses pour émettre de la lumière pouvant être détectés par les récepteurs (2) de lumière,
dans lequel les récepteurs (2) de lumière et les sources (3a,3b) lumineuses sont disposés les uns par rapport aux autres de manière à former, entre les récepteurs (2) de lumière et les sources (3a,3b) lumineuses, des trajets (4) optiques par lesquels les récepteurs (2) lumineux peuvent recevoir de la lumière des sources (3a,3b) lumineuses et
dans lequel les trajets (4) optiques forment, considérés dans une direction (S) de tir conforme aux prescriptions, au moins deux, notamment exactement trois, faisceaux (5a,5b) s'entrecroisant de trajets (4) optiques et définissent ainsi un rideau (10) optique,
à la traversée duquel un projectile (12) interrompt au moins en partie, provisoirement au moins un trajet (4) optique de chacun des faisceaux (5a,5b) qui s'entrecroisent,
b) plusieurs capteurs (11) de mesure acoustiques, qui sont montés à distance les uns des autres pour la détection d'une onde sonore, qui est produite par un projectile (12) lorsqu'il traverse une entité (13) corporelle de type en plan ou de type en plaque s'étendant, lorsque le dispositif est utilisé conformément aux prescriptions, à une distance petite du rideau (10) optique et
c) des moyens (6) électroniques d'exploitation, qui sont constitués de manière à pouvoir, par eux, déterminer la position de passage d'un projectile (12) dans le rideau (10) optique à partir des signaux fournis par les récepteurs (2) de lumière photoélectrique au passage du projectile (12) dans le rideau (10) optique et la position de passage d'un projectile (12) dans une entité (13) corporelle en forme de plan ou de plaque s'étendant, lorsque le dispositif est utilisé conformément aux prescriptions, à une distance petite parallèlement au rideau (10) optique, à partir des différences de temps de parcours des ondes sonores détectées par les capteurs (11) de mesure acoustiques, ondes qui sont produites par le projectile (12) lorsqu'il traverse l'entité (13) corporelle de type en plan ou de type en plaque,
dans lequel le dispositif est constitué de manière à ce que, considérée dans la direction (S) du tir conforme aux prescriptions, une surface (Z) circulaire de diamètre maximum, qui peut être inscrite dans le rideau (10) optique, soit entourée, en tout ou partie, d'une région dans laquelle la position de passage d'un projectile dans une entité (13) corporelle de type en plan ou de type en plaque, s'étendant, lorsque le dispositif est utilisé conformément aux prescriptions, à une distance petite parallèlement au rideau (10) optique, puisse être déterminée à partir des différences de temps de parcours des ondes sonores détectées par les capteurs (11) de mesure acoustiques.

4. Dispositif suivant la revendication 3,
dans lequel le dispositif est constitué de manière à ce que la surface (Z) circulaire de diamètre maximum pouvant être inscrite dans le rideau (10) optique est un diamètre d'au plus les deux tiers, notamment d'au plus la moitié, du diamètre d'une surface (R) circulaire de diamètre maximum de même centre inscrite dans la zone dans laquelle la position de passage d'un projectile (12) dans une entité (13) corporelle de type en plan ou de type en plaque s'étendant, lorsque l'on utilise le dispositif conformément aux prescriptions, à une distance petite parallèlement au rideau (10) optique, puisse être déterminée à partir de différences de temps de parcours des ondes sonores détectées par les capteurs (11) de mesure acoustiques.

5. Dispositif suivant l'une des revendications 3 à 4,
dans lequel les capteurs (11) de mesure acoustiques sont disposés dans un plan parallèlement au rideau (10) optique et notamment dans lequel ce plan s'étend à une distance du rideau (10) optique plus petite que 20 mm.

6. Dispositif suivant l'une des revendications 3 à 5,
dans lequel il y a une pluralité de récepteurs (2) de lumière photoélectriques individuels et dans lequel les récepteurs (2) de lumière et les sources (3a,3b) lumineuses sont disposés relativement les uns par rapport aux autres de manière à former, entre chacun des récepteurs (2) optiques et l'une des sources (3a,3b) lumineuses, un trajet (4) optique par lequel les récepteurs (2) de lumière reçoivent de la lumière de la source (3a,3b) lumineuse.

7. Dispositif suivant l'une des revendications 3 à 6,
dans lequel à chaque faisceau (5a,5b) de trajet (4) optique est associée une source (3a,3b) lumineuse au moyen de laquelle, par émission d'une entité (9) lumineuse continue, notamment par émission d'un rideau (9) lumineux continu, l'ensemble des trajets (4) optiques de ce faisceau peut être alimenté en lumière.

8. Dispositif suivant la revendication 7,
dans lequel les trajets optiques de chacun des au moins deux faisceaux (5a,5b) qui s'entrecroisent, divergent à partir de la source (3a,3b) lumineuse associée au faisceau respectif.

9. Dispositif suivant l'une des revendications 3 à 8,
dans lequel l'ensemble des trajets (4) optiques s'étend dans un plan ou à distance d'au plus +/- 3 mm par rapport à un plan formé au milieu entre les trajets (4) optiques.

10. Dispositif suivant l'une des revendications 3 à 9,
dans lequel tous les trajets (4) optiques ont la même longueur.

11. Dispositif suivant l'une des revendications 3 à 10,
dans lequel au moins une partie des trajets optiques est déviée, notamment par des surfaces de miroir ou par des prismes.

12. Dispositif suivant l'une des revendications 3 à 11,
dans lequel les trajets optiques de chacun des au moins deux faisceaux qui s'entrecroisent, ont, respectivement dans la zone médiane du faisceau respectif, une distance l'un à l'autre plus petite et/ou une divergence plus petite que dans les zones de bord du faisceau.

13. Dispositif suivant l'une des revendications 3 à 12,
dans lequel les récepteurs (2) de lumière, associés aux trajets (4) optiques des au moins deux faisceaux (5a,5b) qui s'entrecroisent, sont disposés par faisceau de manière à ce que leurs surfaces sensibles photoélectriquement soient disposées les unes à côté des autres en une rangée ou en plusieurs rangées.

14. Dispositif suivant la revendication 12 ou la revendication 13,
dans lequel les surfaces sensibles photoélectriquement sont disposées les unes à côté des autres en un nombre plus grand dans la zone médiane du faisceau respectif que dans les zones de bord du faisceau.

15. Dispositif suivant l'une des revendications 13 à 14,
dans lequel les surfaces sensibles photoélectriquement disposées les unes à côté des autres des récepteurs de lumière associés à un faisceau de trajet optique sont pourvues d'un diffuseur optique et/ou d'un agencement de lentilles pour le rapetissement ou la suppression optique des lacunes présentes entre les surfaces individuelles sensibles photoélectriquement.

16. Dispositif suivant l'une des revendications 3 à 15, comprenant, en outre, un agencement de ventilateur pour alimenter les surfaces sensibles photoélectriquement des récepteurs (2) de lumière et/ou les surfaces actives du point de vue de la lumière des sources (3a,3b) lumineuses en un courant d'air en vue d'empêcher le dépôt de salissures.

17. Dispositif suivant l'une des revendications 3 à 16,
dans lequel les récepteurs (2) de lumière et les moyens (6) électroniques d'exploitation sont constitués de manière à pouvoir, pour la détermination de la position de passage d'un projectile (12) dans le rideau (10) optique, déterminer pour chaque récepteur (2) de lumière une pluralité de niveaux de luminosité différents.

18. Dispositif suivant la revendication 17,
dans lequel les moyens (6) électroniques d'exploitation sont constitués de manière à rendre possible en fonctionnement un auto-étalonnage continu de l'agencement (1) en ce qui concerne les niveaux de luminosité maximum et minimum se produisant, pour chaque récepteur (2) de lumière, sur la base des signaux fournis par les récepteurs (2) de lumière et des positions de passage déterminées des projectiles (12).

19. Dispositif suivant l'une des revendications 3 à 18,
dans lequel les moyens (6) électronique d'exploitation sont constitués de manière à rendre possible un étalonnage de l'agencement (1) au moyen de la détermination de position de passage définie dans le rideau (10) optique par un piège à projectile ou par un corps non transparent représentant un canal de tir.

20. Dispositif suivant l'une des revendications 3 à 19,
dans lequel l'agencement (1) est constitué de manière à pouvoir détecter les signaux des récepteurs (2) de lumière au moins 100 000 fois à la seconde, de préférence 200 000 fois à la seconde.

21. Dispositif suivant la revendication 20,
dans lequel les moyens (6) d'exploitation sont constitués de manière à pouvoir, par eux, déterminer, par exploitation des signaux fournis par les récepteurs (2) de lumière photoélectrique lorsque le projectile (12) traverse le rideau (10) optique, la vitesse, la forme et/ou l'épaisseur du projectile (12).

22. Cible de tir notamment panneau de tir, comprenant un dispositif (1) suivant l'une des revendications 3 à 21 et une entité (13) corporelle, notamment en une étoffe en caoutchouc, en une feuille de matière plastique, en papier ou en carton de type en plan ou de type en plaque, s'étendant parallèlement au rideau (10) optique à une distance petite, qui forme une surface sensiblement plane à viser par des projectiles (12).

23. Cible de tir suivant la revendication 12,
dans laquelle l'entité (13) corporelle en forme de plan ou en forme de plaque a, dans une zone centrale, une ouverture (14) de cible, notamment circulaire, dans laquelle un projectile (12) peut passer dans une direction (S) de tir, conforme aux prescriptions, sans traverser l'entité (13) corporelle en forme de plaque ou en forme de plan et dans laquelle la cible de tir est conformée de manière à pouvoir déterminer la position de passage d'un projectile (12) passant dans la direction (S) de tir conforme aux prescriptions dans cette ouverture (14) de cible en un point quelconque, à partir des signaux fournis par les récepteurs de lumière photoélectriques lorsque le projectile (12) traverse le rideau (10) optique.

24. Cible de tir suivant la revendication 23,
dans laquelle la cible de tir est constituée de manière à ce que la position de passage d'un projectile (12) traversant, dans la direction de tir conforme aux prescriptions, une entité (13) corporelle en forme de plan ou en forme de plaque dans une zone de la surface de la cible entourant l'ouverture (14) de la cible, puisse être déterminée, à partir des différences de temps de parcours de l'onde sonore qui est détectée par les capteurs (11) de mesure acoustiques et qui est produite par le projectile (12) lorsqu'il traverse l'entité (13) corporelle de type en plan ou de type en plaque.

25. Cible de tir suivant l'une des revendications 23 à 24,
dans laquelle la cible de tir est constituée de manière à ce que, considérée dans la direction (S) de tir conforme aux prescriptions, une surface (Z) circulaire de diamètre maximum pouvant être inscrite dans la zone dans laquelle la position de passage d'un projectile (12) dans le rideau (10) optique peut être déterminée à partir de signaux fournis par les récepteurs (2) de lumière photoélectriques coïncide sensiblement avec l'ouverture (14) de la cible ou dépasse légèrement des limite de l'ouverture (14) de la cible.

26. Cible de tir suivant l'une des revendications 22 à 25,
dans laquelle les capteurs (11) de mesure acoustiques sont disposés, considérés dans la direction (S) de tir conforme aux prescriptions, derrière l'entité (13) corporelle de type en plan ou de type en plaque et dans laquelle le rideau (10) optique est disposé, considéré dans la direction (S) de tir conforme aux prescriptions, avant ou après l'entité (13) de type en plan ou de type en plaque.

27. Cible de tir suivant l'une des revendications 22 à 26,
dans laquelle les trajets (4) optiques du rideau (10) optique s'étendent, pour une cible de tir orientée conformément aux prescriptions, en diagonale devant, derrière et/ou dans le plan de la cible et les récepteurs (10) de lumière sont disposés au dessus des sources (3a,3b) lumineuses.
